# EUROPÄISCHE PATENTSCHRIFT

(11) **EP 1 026 971 B1**
(45) Veröffentlichungstag und Bekanntmachung des Hinweises auf die Patenterteilung: **15.05.2002**
(21) Anmeldenummer: 98959773.7
(22) Anmeldetag: 26.10.1998
(51) Int. Cl.: A46D 3/00, B29C 45/14

(54) **VERFAHREN UND VORRICHTUNG ZUR HERSTELLUNG VON BORSTENERZEUGNISSEN**
METHOD AND DEVICE FOR PRODUCING BRUSH PRODUCTS
PROCEDE ET DISPOSITIF DE FABRICATION DE PRODUITS A POILS

(30) Priorität: 30.10.1997 DE 19748925; 28.11.1997 DE 19754762
(43) Veröffentlichungstag der Anmeldung: 16.08.2000
(73) Patentinhaber: Schlesinger Maschinenbau Gmbh, 35099 Burgwald (DE)
(72) Erfinder: STIAWA, Paul, D-10435 Berlin (DE); HOEFT, Bernd, D-12555 Berlin (DE); RÜDIGER, Udo, D-12555 Berlin (DE)
(74) Vertreter: Radwer, Dieter
(86) Internationale Anmeldenummer: DE9803166
(87) Internationale Veröffentlichungsnummer: WO9922623

(56) Entgegenhaltungen:
- DE-A- 1 604 673

## Beschreibung

Die Erfindung betrifft ein Verfahren und eine Vorrichtung zur Herstellung von Borstenerzeugnissen, wie Bürsten, Besen, Pinsel und dergleichen, unter Verwendung endloser Borstenschnüre, deren Bürstenkörper aus Kunststoff gespritzt werden, wobei die Borstenbündel als Spitzen der endlosen, durch Bohrungen in der Bodenplatte des Spritzwerkzeuges in den Forminnenraum eingeführten Borstenschnüre mit eingegossen werden.

Seit dem Einsatz von Kunststoffborsten bei der Fertigung von Borstenerzeugnissen werden technologische Lösungen zur Herstellung dieser Erzeugnisse unter Verwendung endloser Borstenschnüre gesucht.

Das in der Bürstenfertigung, von der im folenden beispielhaft ausgegangen werden soll, nach wie vor überwiegend angewandte "Anker-Verfahren", bei dem Borstenbündel in vorgefertigte/vorgebohrte Bürstenkörper mit Hilfe einer Borstenstopfmaschine eingestopft und mit Draht- oder Plättchenanker am Lochgrund befestigt werden, besitzt viele Nachteile.

Neben den sehr hohen Ausrüstungsaufwendungen sind es insbesondere auch Qualitätsfragen der Fertigerzeugnisse, die zur Suche nach alternativen Lösungen Anlaß geben. So sind bei dem mechanischen Stopfen der Borstenbündel in vorbereitete Bohrungen der Bürstenkörper geringfügige Zwischenräume und Lücken zwischen den Wandungen der Bohrlöcher und den Filamenten der Borstenbündel sowie auch zwischen den Filamenten der Borstenbündel selbst unvermeidlich. Diese werden zu Quellen von Fäulniserscheinungen und leisten verunreinigungen Vorschub.

Zur Lösung der technologischen und qualitativen Probleme werden mehrere, prinzipiell unterschiedliche Wege gegangen, z.B. das Verbinden der Borstenenden und der entsprechenden Bohrungen im Bürstenkörper durch Anschmelzen/Aufschmelzen oder als besonders rationelle Lösung das unmittelbare Einbetten der Borstenenden im Bürstenkörper aus Kunststoff unmittelbar bei dessen Spritzgießen in einer Spritzform.

Es wird auch vorgeschlagen, die Spitzen von Borstenschnüren durch Bohrungen der Bodenplatten eines Spritzwerkzeuges in den Forminnenraum für den Bürstenkörper zu führen und sie beim Spritzgießen in einem Arbeitsgang in diesen Bürstenkörper mit einzuhüllen.

Das schwierigste und praktisch bisher nicht gelöste Problem bei dem Einbetten der Borstenenden im Zuge des Spritzgießens des Bürstenkörpers ist die sichere Vermeidung von Durchspritzungen durch die für die Einführung der Borstenschnüre in den Forminnenraum erforderlichen Bohrungen in der Bodenplatte der Spritzform.

Nach einem bekannten Verfahren gemäß DD 293 718 A5 werden Borstenbündel von endlosen Borstenschnüren aus Kunststoff für Bürstenwaren verwendet, indem die Schnurspitzen durch Bohrungen in den Bodenplatten des Spritzwerkzeuges in die Forminnenräume geführt und ohne weitere Bearbeitung beim Spritzgießen des Bürstenkörpers in diesen gleich mit eingespritzt werden.

Diese Verfahrensvorschläge enthalten Aussagen darüber, daß Massedurchspritzungen mit Hilfe konischer, sich zum Forminnenraum hin verjüngender Bohrungen in der Bodenplatte, die zylindrisch auslaufen, und wodurch eine leichte Pressung der Borstenschnüre erreicht werden kann, zu verhindern wären. Eine Vielzahl praktischer Versuche hat jedoch gezeigt, daß damit der Tendenz der Spritzmasse in Abhängigkeit vom Spritzdruck und dem Grad der temperaturabhängigen Viskosität während des Spritzvorganges zwischen den Filamenten der Borstenschnüre sowie zwischen den Borstenschnüren und den Wandungen der Bohrungen nach außen auszutreten, nicht wirkungsvoll geräte- und/oder verfahrenstechnisch begegnet werden kann. Darüber hinaus führen die geringfügigsten Masseaustritte bei konisch gestalteten Bohrungen sofort zur Bildung von Kunststoffpropfen in diesen Bohrungen, die das Ziehen der Borstenschnüre durch die Bohrungen der Bodenplatte bei der Endformung sehr wirkungsvoll verhindern und in der Regel Unterbrechungen der Produktion mit zum Teil schweren Hinterspritzungen an den Bodenplatten der Spritzwerkzeuge zur Folge haben. Mit den in diesen Verfahren vorgeschlagenen Maßnahmen sind die Probleme der sicheren Vermeidung von Durchspritzungen während des Spritzvorganges nicht zu lösen.

Ein Verfahren zur Herstellung von bereichsweise aus mindestens zwei Kunststoffkomponenten gebildeten Bürstenkörpern mit einem Borstenfeld für Zahnbürsten ist aus DE 44 39 431 A1 bekannt. Bei diesem Verfahren werden in einer Borstenhalterung befindliche, bereits abgelängte und zu Borstenfeldern zusammengestellte Borstenbündel in einem ersten Arbeitsgang bei der Herstellung des Bürstenkörpers mit eingespritzt. Es wird also nicht von dem Einsatz endloser Borstenschnüre ausgegangen. Es wird in dieser Druckschrift auch nicht dargestellt, wie die Borstenbündel reibschlüssig in die Borstenhalterung, deren Bestückung außerhalb des Werkzeuges in separaten Arbeitsgängen erfolgen soll, eingebracht werden. Insbesondere erfolgt keine Darstellung, wie das Eindringen von Spritzmasse in die Bohrungen der Borstenhalterung, die trotz der reibschlüssigen Packung der Borstenbündel auftreten dürften, verhindert werden soll. Auch dieses Verfahren kann aus den angeführten Gründen die dargestellten Probleme nicht lösen.

Ein weiterer Problemschwerpunkt bei der Herstellung von Borstenerzeugnissen unter Verwendung endloser Borstenschnüre ist das Durchtrennen der Borstenschnüre nach Abschluß des Spritzgießprozesses in Verbindung mit der Bereitstellung der erforderlichen Borstenlängen für den nachfolgenden Spritzgießvorgang innerhalb eines automatisierten, kontinuierlichen Produktionsablaufes.

Nach DD 293 718 A5 wird das Trennen der fertiggestellten Bürstenerzeugnisse von den in den Bohrungen der Bodenplatte des Spritzwerkzeuges verbleibenden Borstenschnüre im freien Raum durchgeführt. Dazu werden nach dem Abkühlen der Bürstenkörper das Oberteil und ein rahmenförmiges Mittelteil des Spritzwerkzeuges mit dem erhärteten Bürstenkörper von der Bodenplatte abgehoben und dabei die Borstenschnüre in den erforderlichen Längen durch die Bohrungen in der Bodenplatte hindurchgezogen. Dabei wird der Bürstenkörper mit Hilfe einer Zwischenplatte von der Bodenplatte abgehoben. Nähere Angaben zur Art und Funktion der Trennvorrichtung und zur Schaffung weiterer erforderlicher Schnittbedingungen für eine Trennung der Borstenschnüre im freien Raum ohne unterstützende Schneidkante sind in der vorgeschlagenen Lösung jedoch nicht angegeben.

Es ist bisher nicht gelungen, die Borstenschnüre unter den dort genannten Voraussetzungen, gleichgültig, ob mit rotierenden oder hin- und herbewegten-Messern, ohne unterstützende Schneidkante zu trennen. Eine Vielzahl von Filamenten der zu trennenden Borstenschnüre wird während des Trennprozesses durch die Bohrungen der Bodenplatte hindurchgezogen, und es entstehen instabile Schnittbedingungen. Das vorgestellte Verfahren kann aus den genannten Gründen die bestehenden Probleme nicht lösen.

Aus DE-PS 845 933 ist das Trennen von Zahnbürsten bei geöffnetem spritzwerkzeug mit Hilfe einer rotierenden Trennscheibe bekannt, wobei die Zahnbürsten während des Trennprozesses nicht stabil, beispielsweise durch eine Zwischenplatte oder eine andere Halteeinrichtung, festgehalten werden. Das Trennen der fertigen Bürstenerzeugnisse von den Borstenfeldern ohne Herbeiführung einer stabilen Lage des Bürstenkörpers, wie sie in dieser Druckschrift vorgeschlagen wird, ist aufgrund der tatsächlichen Vorgänge bei derartigen Trennprozessen äußerst schwierig. Die fehlende stabile Lage der Bürstenkörper während des Trennprozesses läßt die. Möglichkeit eines Trennschnittes über das ganze Borstenfeld stark bezweifeln. Auch können die Bürstenkörper während des Trennvorganges zwangsläufig aus ihrer Positionierung gerissen und im Werkzeug herumgewirbelt werden, wodurch stabile Produktionsabläufe faktisch unmöglich sind.

Das Trennen mittels rotierender Trennscheibe ist insbesondere aus zwei Gründen problematisch, wobei die obengenannten Mängel davon unberührt bleiben. Zum einen hat ein richtungsgleicher Schnitt andauernde Reibungs- und Zugkräfte in seiner Bewegungsrichtung zur Folge. Diese werden durch die rotierende Bewegung der Trennscheibe auf die zu trennenden Borstenschnüre und deren einzelne Filamente übertragen, wodurch. relativ große. Zug- und Ausreißkräfte entstehen. Das führt in der Regel zum Ausreißen von Borsten und Borstenbündeln aus dem Bürstenkörper und zum Herausziehen der Borstenschnüre aus den Bohrungen der Bodenplatte des Spritzwerkzeuges, durch die die Borstenschnüre des Borstenfeldes hindurchgeführt sind.

Andererseits erzeugt die hohe Rotationsgeschwindigkeit der Trennscheibe mit zunehmender Eindringtiefe eine höhere Reibung mit Zunahme der dadurch entstehenden Reibungswärme. Das führt zu Verschmelzungen an den Schnittstellen der Borstenschnüre und zu Verklebungen auf der Trennscheibe. Versuche zeigten, daß es kaum möglich ist, diese Erscheinungen, auch nicht durch das Hinterschneiden der Trennscheibe, zu vermeiden. Auch dieses Verfahren kann aus den angeführten Gründen die bestehenden Probleme nicht lösen.

Der Erfindung liegt die Aufgabe zugrunde, ein Verfahren und eine Vorrichtung zur Herstellung von Bürstenerzeugnissen der eingangs genannten Gattung zu entwickeln, die ohne zusätzliche Maßnahmen Durchspritzungen im Bereich der Borstenbündel zuverlässig vermeiden und eine stabile Befestigung der Borsten im Bürstenkörper sichern und nach Abschluß des Spritzgießverfahrens unter Bereitstellung der erforderlichen Borstenlängen für den nachfolgenden Spritzprozeß ein nacharbeitfreies Durchtrennen des Borstenfeldes des fertiggespritzten Bürstenerzeugnisses im freien Raum gewährleistet.

Erfindungsgemäß wird die Aufgabe durch ein Verfahren entsprechend den Merkmalen nach Anspruch 1 und eine Vorrichtung nach den Merkmalen des Anspruches 12 gelöst. Vorteilhafte Weiterbildungen des Verfahrens sind in den Unteransprüchen 2 bis 11 angegeben.

Durch das erfindungsgemäße Verfahren ist gewährleistet, daß die Anforderungen an ein hochwertiges Bürstenerzeugnis, wie eine glatte, ebene Bodenfläche und ein inniges, möglichst stoffschlüssiges Ummanteln der eingespritzten Borstenenden und damit eine stabile Befestigung der Borsten im Bürstenkörper erfüllt werden. Die Lösung der Aufgabenstellung und die Erreichung des vorgenannten Zieles setzt eine möglichst geringe Viskosität der Spritzmasse und möglichst hohen Druck zur Erzielung der größtmöglichen Einspritzgeschwindigkeit und zur Vermeidung von Wärmeverlusten voraus. Dies wird erfindungsgemäß dadurch erreicht, daß in der die Versieglung herstellenden ersten Stufe des mehrstufigen Spritzverfahrens Kunststoffmasse mit einer Geschwindigkeit über 100 mm/s und einem Druck von über 1,5 x 10⁸ Pa in den Forminnenraum eingebracht wird.

Daß trotz des hohen Einspritzdruckes und der hohen Einspritzgeschwindigkeit Durchspritzungen vermieden werden, wird erfindungsgemäß dadurch erreicht, daß in der ersten Stufe nur soviel Kunststoffmasse eingespritzt wird, daß die Bodenplatte, einschließlich des gesamten Borstenfeldes, damit bedeckt ist, ohne den Forminnenraum vollständig auszufüllen.

Mit diesen Parametern, zweckmäßigerweise gerätetechnisch noch ergänzt durch einen Heißkanal, wird eine unerwünschte Abkühlung der Spritzmasse in der ersten Spritzstufe, bis die Masse auf das Borstenfeld auftrifft, vermieden, ohne daß sich im Forminnenraum ein wesentlicher Staudruck aufbauen kann.

Der hohe Einspritzdruck in der ersten Stufe ist damit rein theoretischer Natur und.korrespondiert lediglich mit der hohen Einspritzgeschwindigkeit, führt aber nicht zu einem unerwünschten Druckaufbau im Forminnenraum.

Trifft diese erste Masseinjektion auf die gekühlte bzw. temperierte Bodenplatte im Forminnenraum, so kommt es durch den sofortigen Temperaturverlust einer dünnen, die Bodenplatte unmittelbar berührenden Masseschicht zu einer Versiegelung der perforierten Bodenplatte. Diese Versiegelung setzt sich mit einer geringen zeitlichen Verzögerung fort auf die Borstenschnüre an der Stelle ihres Austritts aus den Bohrungen der Bodenplatte.

Diese, die Versiegelung bewirkende Schicht, die anfänglich, besonders im Bereich der Borstenschnüre, sehr dünn und demzufolge auch sehr empfindlich ist, kann jedoch bis zu einem bestimmten Druckbereich als eine ausreichende Barriere an den Übergängen der Borstenschnüre zu den Bohrungen der Bodenplatte vor der nachdrängenden Spritzmasse in den folgenden Einspritzstufen genutzt werden.

Dabei ist erfindungsgemäß von Bedeutung, daß in der ersten Stufe nur soviel Masse eingespritzt wird, wie zur Versiegelung der Bodenplatte und zur Erreichung der Qualitätsanforderungen an Haftung und Stellung der Borstenbündel erforderlich ist. Damit kann einerseits ein Wärmestau an der Bodenplatte durch nachdrängende Spritzmasse in Grenzen gehalten und andererseits schneller ein wachsender Versiegelungseffekt an der Oberfläche der Bodenplatte durch die von der bodennahen Masseschicht abgeleiteten Wärmeenergie erreicht werden.

Um den wachsenden Versiegelungseffekt weitestgehend zu nutzen, wurde der Spritzverlauf erfindungsgemäß zeitlich gestreckt, so daß die letzte, den Forminnenraum des Werkzeuges füllende Einspritzstufe, entsprechend den durchgeführten Versuchen in einem Bereich von ca. 2,5 bis 9 s nach dem Spritzbeginn gelegt wurde.

Der Aufbau eines Staudrucks, bereits vor der vollständigen Füllung des Forminnenraumes des Spritzwerkzeuges durch mit hoher Geschwindigkeit nachdrängende Spritzmasse, wird erfindungsgemäß durch eine Reduzierung des Einspritzdruckes auf Werte unter 4 x 10⁷ Pa in Verbindung mit der Reduzierung der Einspritzgeschwindigkeit erschwert bzw. verhindert. Um das plastische Verhalten der Randzonen der Filamente von Borstenmaterial aus Kunststoff bei hohen Temperaturen für eine teilweise nicht nur form-, sondern auch stoffschlüssige Verbindung zwischen Bürstenkörper und Borstenschnüren zu nutzen, wird erfindungsgemäß die Temperatur der Spritzmasse für den Bürstenkörper in sehr hohen Bereichen und über der Fließtemperatur (FT) bzw. der Kristallit-Schmelztemperatur (KT) (zutreffend für kristalline oder teilkristalline Polymere) des Borstenmaterials gewählt.

So wird Borstenmaterial aus Polyamid 6 (PA 6), das eine hohe KT von 265 °C besitzt, mit Polypropylen (PP) für den Bürstenkörper kombiniert, das eine KT von nur 165 °C aufweist. Mit einer Einspritztemperatür des PP von 10 °C über der KT des PA 6 wurden gute Ergebnisse in bezug auf die Qualität des Endproduktes erzielt als auch Durchspritzungen ausgeschlossen, obwohl in diesen Temperaturbereichen Polypropylen extrem dünnflüssig ist.

Damit wird aufgrund der Rekristallisation des Polyamid 6 zusätzlich erreicht, daß die Borstenbündel nach der Entformung des Bürstenkörpers straff aufrecht und eng gebündelt exakt in Übereinstimmung mit ihrer Stellung in den Bohrungen der Bodenplatte während des Spritzvorganges stehen. Außerdem wird durch die Nutzung der Schwundparameter (bei Polypropylen bis zu 2 %) ein weiterer Haftungseffekt der Borstenbündel im Bürstenkörper erreicht.

Wie Versuche zeigten, gelingt es mit dieser Spritztechnik, die Tendenz zu Durchspritzungen im Bereich der Borstenschnüre auf einfache Weise, ohne umfangreichen zusätzlichen technologischen Aufwand zu unterbinden. Um diesen Effekt zu erreichen, sind auch keine besonderen Pressungen der Borstenbündel in den Bohrungen der Bodenplatte erforderlich.

Nach Abschluß eines Spritzgießprozesses und Erreichen der öffnungsposition des Spritzwerkzeuges wird das Borstenfeld durch die Doppelplatten der Bodenplatten sofort wieder verklemmt, wobei die Zwischenplatte den Bürstenkörper gegen die Zugrichtung der Borstenschnüre stabil festhält und dadurch zwischen dem Bürstenkörper und der Bodenplatte eine Zone straff gespannter Borstenschnüre geschaffen wird, in der der Schnittvorgang nur unter Nutzung der Spannung der Borstenschnüre und der inneren Steifheit der Borstenfilamente erfolgt. Die auf diese Weise straff gespannten Borstenschnüre werden unter Berücksichtigung der erforderlichen Borstenlängen für den nachfolgenden Spritzvorgang mit Hilfe eines hin- und herschwingenden Trennmessers ohne Gegenschneide durchtrennt. Durch den Einsatz der als Doppelplatte ausgebildeten Bodenplatte wird das Verklemmen des Borstenfeldes sowie die Entklemmung im technologisch erforderlichen Umfang für das gesamte Borstenfeld problemlos gelöst.

Durch Einsatz eines hin- und herbewegten flachen Trennmessers wird der Aufbau von anhaltenden Druck- und Ausreißkräften, die in eine Richtung auf die Borstenbüschel einwirken, vermieden. Auch die Entwicklung von Reibungswärme beim Durchtrennen der Borstenfelder wird wegen der wesentlich geringeren Schnittgeschwindigkeit des flachen Trennmessers gegenüber einer mit hoher Umdrehungszahl arbeitenden Trennscheibe sowie wegen der geringen Reibungsfläche dieses Messers stark reduziert, wodurch der Trennprozeß praktisch nicht beeinträchtigt wird.

Damit die Zwischenplatte den Bürstenkörper stabil festhalten kann, sollten deren Konturen mit Hilfe von Schrägen und/oder Stufen so gestaltet werden, daß beim Öffnen des Spritzwerkzeuges die Bürstenkörper durch diese Platte in die vorgegebene Höhe abgehoben, sie jedoch nach dem Trennen des Borstenfeldes in Richtung der Deckplatte ausgestoßen werden können.

Das hat den Vorteil, daß einerseits durch die breiten Angriffsflächen der Zwischenplatte auf die Konturen des Bürstenkörpers relativ hohe Zugkräfte für das Abheben von der Bodenplatte wesentlich schonender auf den abgekühlten Bürstenkörper übertragen werden können als beim Einsatz von Auswerferdornen. Damit erfolgt das Ziehen der Borstenschnüre des Borstenfeldes durch die für diese Zeit geöffneten Bohrungen der Bodenplatte ohne Beeinträchtigung der Oberfläche des Bürstenkörpers. Andererseits können dadurch nach der Trennung des Borstenfeldes die abgetrennten Borstenerzeugnisse ausgestoßen werden.

Eine vorteilhafte Ausgestaltung ist im. Anspruch 9 gegeben. Nach der technischen Lehre gemäß Anspruch 9 wird die Deckplatte des Werkzeuges bei dem Öffnungsvorgang über die Zwischenplatte hinaus soweit aufgefahren, daß nach dem Abschluß des Trennvorganges die fertigen Bürsten durch die Auswerferdorne problemlos und ohne schädliche Kerbungen am Bürstenkörper zu hinterlassen in Richtung Deckplatte aus der Zwischenplatte ausgestoßen werden können.

In der weiteren Ausgestaltung der Erfindung ist vorgesehen, daß für den erfolgreichen Einsatz der Trennvorrichtung im Trennprozeß die erforderlichen Voraussetzungen geschaffen werden, die der Herstellung stabiler. Schnittbedingungen für das quer zur Schneidrichtung hin- und herbewegte flache Trennmesser dienen.

Dazu ist es erforderlich, den günstigsten Abstand der Schnittebene des Trennmessers von der Bodenplatte zu bestimmen. Dies wird dadurch erreicht, daß die Schnittebene des Trennmessers in eine Distanz von der Bodenplatte gelegt wird, die es bei der Überwindung des relativ hohen Schneidwiderstandes, der von den Borstenschnüren dem Trennmesser entgegengesetzt wird, noch zuläßt, die innere Steifheit der Borstenschnüre zu nutzen. Diese Distanz. definiert sich aus der inneren Steife des Borstenmaterials, dem Durchmesser der Filamente, der Stärke der Borstenschnüre und der stabilen Führung der Borstenschnüre in den Bohrungen der Bodenplatte und wird empirisch ermittelt. Die bisherigen Ergebnisse zeigen, daß diese Distanz zwischen dem zwei- bis dreifachen Durchmesser der Borstenschnüre liegt.

Eine weitere Voraussetzung für den erfolgreichen Trennprozeß ist die Bewältigung des Problems, daß die einzelnen Filamente der Borstenschnüre in Abhängigkeit von ihrer Lage, ob sie sich an der Peripherie oder in mittleren Lagepositionen der Borstenschnüre befinden, unterschiedlich fest in den Bohrungen der Bodenplatte festgehalten werden.

In Abhängigkeit von ihrer Lageposition innerhalb der Borstenschnüre reagieren die Filamente gegenüber den bei dem Schneidvorgang auftretenden Zugkräften auch differenziert. Dieses Verhalten hat bestimmenden Einfluß auf die Gestaltung des Schneidprozesses.

Bei der Klemmung der Borstenschnüre in der Bodenplatte werden die in Klemmrichtung der Bohrung außen liegenden Filamente wesentlich stärker in ihrer Position fixiert als die quer zur Klemmrichtung oder die im Inneren der Bohrungen und der Borstenschnüre befindlichen Filamente. Das wird auch durch die an den Klemmstellen auftretenden' Narben an diesen Filamenten deutlich.

Erfindungsgemäß wird die Voraussetzung dafür, daß diese Filamente den extremen Zugbelastungen im Moment ihrer geringsten Widerstandsfähigkeit standhalten können, dadurch geschaffen, daß die Klemmrichtung der Bodenplatte mit der Richtung der Hin- und Herbewegung des Trennmessers übereinstimmt. Dadurch wird erreicht, daß die in den am stärksten fixierten äußeren Positionen befindlichen Filamente der Borstenschnüre beim Einsatz des Trennmessers im Wechsel der Hin- und Herbewegungen sich jeweils an der vorderen bzw. hinteren Seite der Borstenschnur befinden und damit im Wechsel der Bewegungen den Zugbelastungen des Messers den stärksten Widerstand entgegenzusetzen vermögen.

Zum Durchtrennen der Borstenschnüre verwendet die Erfindung eine an sich bekannte Trennvorrichtung, die einen Elektromotor, ein Reduktionsgetriebe und ein Exenter besitzt, mit denen ein hin- und herbewegtes flaches Trennmesser angetrieben wird. Die Vorrichtung wird zentral im Spritzgießwerdzeug zwischen den Borstenfeldern in Führungsbahnen quer zur Bewegungsrichtung des Trennmessers nach Öffnen des Werkzeuges abgesenkt.

Der Vorteil der erfindungsgemäßen Lösung besteht vor allem darin, daß mit einem Arbeitsgang einerseits fertige Bürstenerzeugnisse das Spritzgießwerkzeug verlassen können, während gleichzeitig für den nächsten Spritzvorgang fertig aufbereitete Borstenfelder durch die Bohrungen der Bodenplatte in der erforderlichen Länge in die Forminnenräume des Spritzgießwerkzeuges nach Schließen der Form hineinragen, ohne daß zusätzliche technologisch aufwendige Schritte zur Nachführung der Borstenschnüre erforderlich sind.

Nach der vorschlagsgemäßen Lösung können z.B. auch Borstenmaterialien aus Metall in den Bürstenkörper eingespritzt werden. Bei Stahldraht, wie er für die Fertigung von Handdrahtbürsten eingesetzt wird und bei dem keinerlei Preßwirkungen möglich sind, konnten Durchspritzungen wirkungsvoll vermieden werden. Es wurde eine einwandfreie Haftung der die Borsten bildenden Drahtbündel im Bürstenkörper erreicht.

Die Erfindung soll nachstehend an einem Ausführungsbeispiel näher erläutert werden. In den dazugehörigen Zeichnungen zeigen:
- Fig. 1 -: die Seitenansicht eines geöffneten, aus Oberteil, Unterteil und Zwischenplatte bestehenden Spritzgießwerkzeuges mit integrierter Trennvorrichtung
- Fig. 2 -: die Draufsicht auf das Unterteil des Spritzgießwerkzeuges, das mit zwei Modulen zur Herstellung von Handwaschbürsten ausgestattet ist
- Fig. 3 -: den Schnitt A - A durch die Doppelplatten des Bodenteiles in der Stellung des Verklemmens der Borstenschnüre
- Fig. 4 -: das geschlossene Spritzwerkzeug mit dem in der ersten Einspritzstufe zur Versiegelung der Bohrungen der Bodenplatte der Spritzform eingebrachten Material des Bürstenkörpers

Im nachfolgenden Beispiel werden für die Herstellung von Handwaschbürsten als Kunststoffmasse für den Bürstenkörper Polypropylen und für das Borstenmaterial Polyamid 6 eingesetzt.

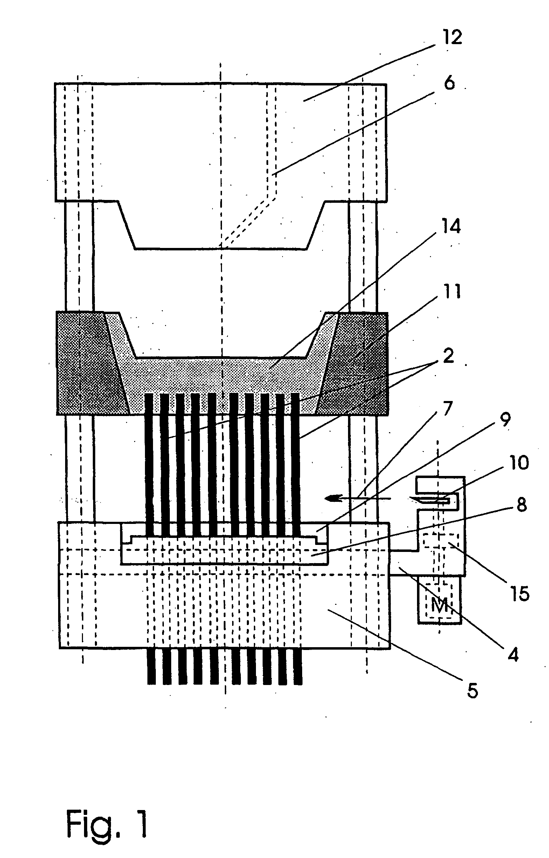

Das in Fig. 1 schematisch dargestellte Spritzgießwerkzeug wird auf bekannte Weise in eine Spritzgießmaschine eingebaut und besteht im wesentlichen aus Grundplatte 5, Zwischenplatte 11, Deckplatte 12 und einer Trennvorrichtung 4, mit einem Trennmesser 10, dem Exzenter 15 und einem Reduktionsgetriebe.

Die in das Spritzgießwerkzeug integrierte und mit ihrer Innenkontur die Außenkontur des Bürstenkörpers 14 bildende Zwischenplatte 11 sowie die Grundplatte 5, die die geteilten Bodenplatten 8; 9 aufnimmt, sind zu der Deckplatte 12 verfahrbar angeordnet.

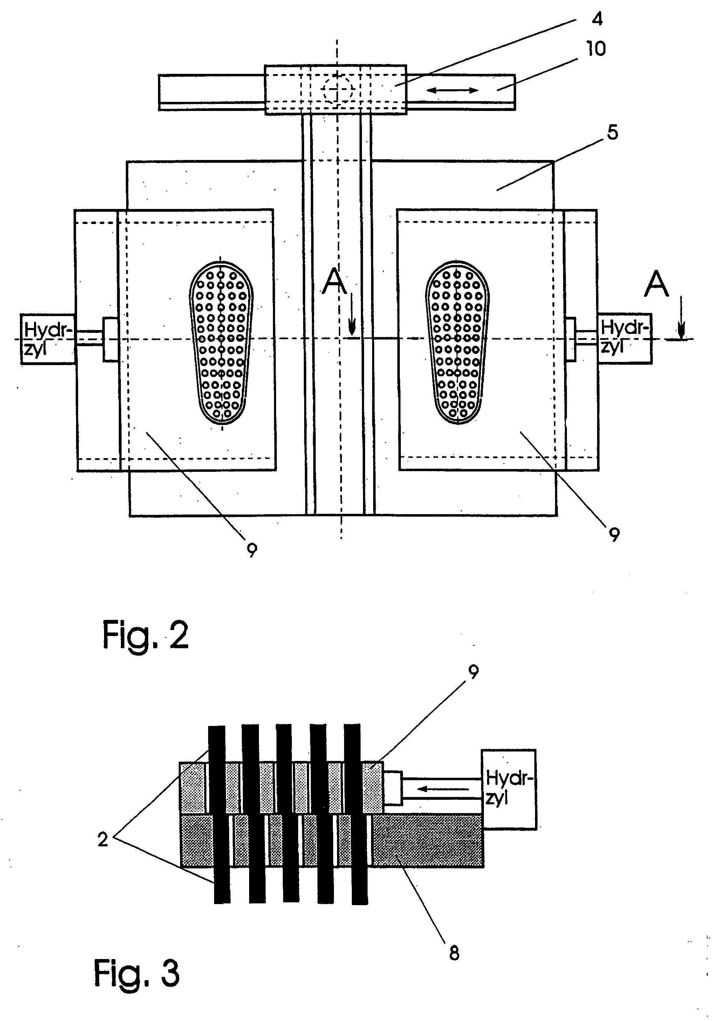

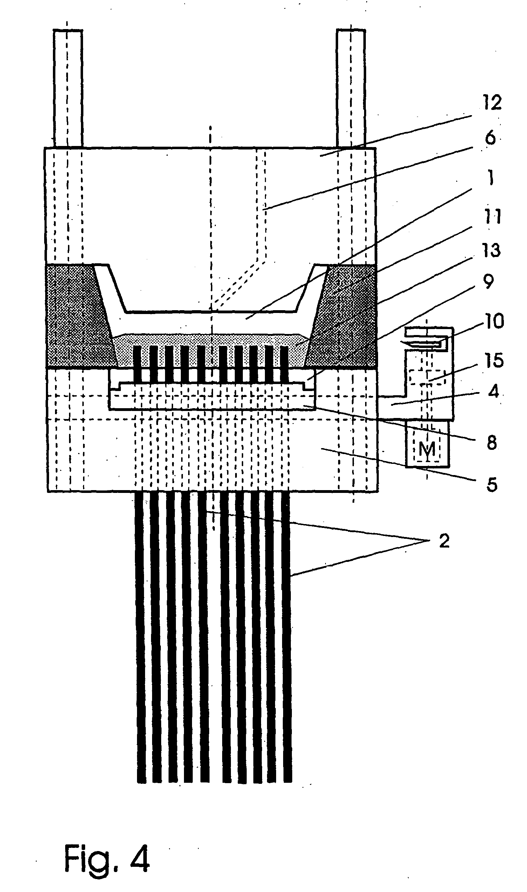

Die endlosen Borstenschnüre 2 sind durch die aus zwei gegeneinander verschiebbaren Platten bestehenden perforierten Bodenplatten 8; 9 - Fig. 3 hindurchgeführt und, außer in der Phase der Werkzeugöffnung, verklemmt und ragen in den Forminnenraum 1 - Fig. 4 in einer Länge, wie sie in den Bürstenkörper 14 eingespritzt werden sollen, hinein.

In einer ersten Einspritzstufe wird mit einem Spritzdruck von ca. 1,5 x 10⁸ Pa und einer Spritzgeschwindigkeit von 100 mm/s ein solches Volumen an Kunststoffmasse, beispeilweise ca. 60% des Volumens des Bürstenkörpers 14, durch den Heißkanal 6 in den Forminnenraum 1 eingespritzt, daß sie die perforierte Oberfläche der Bodenplatte 9, einschließlich der in den Forminnenraum 1 hineinragenden Spitzen der Borstenschnüre 2, mit Kunststoffmasse 13 einhüllen - Fig. 4 - ohne jedoch den Forminnenraum 1 vollständig auszufüllen.

In den nachfolgenden Stufen wird, unter Vermeidung des Aufbaus eines Staudrucks im Forminnenraum 1, die Einspritzgeschwindigkeit beispielsweise auf Werte von 30 mm/s, 10 mm/s, 4 mm/s bis 2 mm/s in der letzten Einspritzstufe reduziert.

Nach Abkühlung des gespritzten Bürstenkörpers 14 wird die Verklemmung der Borstenschnüre 2 durch die geteilte Bodenplatte 8; 9 gelöst und während des Öffnens der Spritzgießwerkzeuges der Bürstenkörper 14 durch die Zwischenplatte 11 von der Bodenplatte 9 schonend soweit abgehoben, wie es die Borstenlänge für das fertige sowie die Borstenlänge für das in den nachfolgenden Bürstenkörper einzuspritzende Borstenfeld erfordern.

Bei diesem Öffnungsvorgang werden die in den Bürstenkörper 14 eingegossenen und nunmehr darin fest verankerten Borstenschnüre 2 durch die geteilte Bodenplatte 8; 9 gezogen und in dieser Bodenplatte nach dem Erreichen der vollen Öffnungsposition des Spritzgießwerkzeuges wieder verklemmt.

Damit wird zwischen Bürstenkörper 14 und der Bodenplatte 8;9 eine Zone straff gespannter Borstenschnüre 2 geschaffen, die in der vorgegebenen Schnittebene 7, im freien Raum, von der Trennvorrichtung 4 mit einem Trennmesser 10, in einem ohne Gegenschneide durchzuführenden Schnitt, von den Borstenschnüren 2 für das nächste Erzeugnis abgetrennt werden.

Der zweckmäßige Abstand der Schnittebene 7 des Trennmessers 10 von der Bodenplatte 9 wird bestimmt, indem die Schnittebene 7 in eine Distanz von der Bodenplatte 9 gelegt wird, die es noch zuläßt, die innere Steifheit der Borstenschnüre 2 für den Trennschnitt zu nutzen. Im dargestellten Beispiel wurde bei einer Stärke der Filamente aus PA 6 von 0,3 mm, einem Durchmesser der Borstenschnüre 3 von 2,2 mm eine Schnittebene 7 mit einem Abstand von 6,0 mm zur Bodenplatte 9 festgelegt.

Die Bewegungsrichtung der Bodenplatten 8; 9, die Einfluß auf den Widerstandsgrad der Filamente der Borstenschnüre 2 auf die vom Trennmesser 10 ausgehenden Auszugskräfte haben, stimmt mit der Richtung der Hin- und Herbewegung des Trennmessers 10 überein.

Durch die erfindungsgemäße Lösung werden entscheidende technologische Schwierigkeiten ausgeräumt, die bisher dem Einsatz von endlosen Borstenschnuren aus Kunststoff bei der Herstellung von Bürstenerzeugnissen mit Spritzgießwerkzeugen durch das direkte Einspritzen der Borstenbündel in den Bürstenkörper prinzipiell entgegenstanden.

### Bezugszeichenaufstellung

- 1: Forminnenraum
- 2: Borstenschnüre
- 3: -
- 4: Trennvorrichtung
- 5: Grundplatte
- 6: Heißkanal
- 7: Schnittebene
- 8: Bodenplatte
- 9: Bodenplatte
- 10: Trennmesser
- 11: Zwischenplatte
- 12: Deckplatte
- 13: Kunststoffmasse
- 14: Bürstenkörper
- 15: Exzenter

## Patentansprüche

1. Verfahren zur Herstellung von Borstenerzeugnissen, wie Bürsten, Besen, Pinsel und dergl., deren Bürstenkörper aus Kunststoff gespritzt werden, wobei die Borstenbündel als Spitzen endloser, durch Bohrungen in der Bodenplatte in den Forminnenraum eingeführter Borstenschnüre mit eingegossen werden, **dadurch gekennzeichnet, daß** bei dem Spritzgießen der Büstenkörper (14) in einer ersten Einspritzstufe eine Versiegelung der Bohrungen der Bodenplatte (8; 9) des Spritzgießwerkzeuges einschließlich der in den Forminnenraum (1) hineinragenden Spitzen der Borstenschnüre (2) mit Kunststoffmasse vorgenommen wird, bevor in mehreren weiteren, mit nach Druck, Geschwindigkeit und Volumen differenzierten Einspritzstufen der Forminnenraum (1) gefüllt wird und nach Abschluß des Spritzgießprozesses und Erreichen der Öffnungsposition des Werkzeuges die Borstenschnüre (2) des Borstenfeldes durch die Bodenplatten (8; 9) der Grundplatte (5) sofort wieder verklemmt werden und die Zwischenplatte (11) nach Erreichen der Öffnungsposition des Werkzeuges den Bürstenkörper (14) gegen die Zugrichtung der Borstenschnüre (2) stabil festhält und dadurch zwischen dem Bürstenkörper (14) und der Bodenplatte (9) eine Zone straff gespannter Borstenschnüre (2) geschaffen wird, in der der Schnittvorgang nur unter Nutzung der Spannung der Borstenschnüre (2) und der inneren Steifheit der Borstenfilamente erfolgt, wobei das Tremmmesser (10) als hin- und herschwingendes Flachmesser ohne Gegenschneide ausgebildet ist.

2. Verfahren nach Anspruch 1, **dadurch gekennzeichnet, daß** in der die Versiegelung bewerkstelligenden ersten Stufe des mehrstufigen Spritzverfahrens Kunststoffmasse (13) mit einer Geschwindigkeit über 100 mm/s und einem Druck von über 1,5 x 10⁸ Pa in den Forminnenraum (1) eingespritzt wird.

3. Verfahren nach Anspruch 1 oder 2, **dadurch gekennzeichnet, daß** in der ersten Stufe Kunststoffmasse (13) in einem Umfang eingespritzt wird, daß die Bodenplatte (9) einschließlich des gesamten Bostenfeldes damit bedeckt ist, ohne den Forminnenraum (1) vollständig auszufüllen.

4. Verfahren nach einem der Ansprüche 1 bis 3, **dadurch gekennzeichnet, daß** in den weiteren Einspritzstufen, bis zur vollständigen Füllung des Forminnenraumes (1) und dem Abschluß des Spritzprozesses, der Spritzdruck 4 x 10⁷ Pa nicht übersteigt.

5. Verfahren nach einem der Ansprüche 1 bis 4, **dadurch gekennzeichnet, daß** zwischen der ersten Einspritzstufe und dem Abschluß des Spritzprozesses ein Zeitraum von mindestens 2,5 s liegt.

6. Verfahren nach einem der Ansprüche 1 bis 5, **dadurch gekennzeichnet, daß** die Temperatur der Spritzmasse für den Bürstenkörper (14) in Bereichen zu:wählen ist, die ca. 10° C über der Fließtemperatur FT bzw. der Kristallit-Schmelztemperatur KT (zutreffend für kristalline- oder teilkristalline Polymere) des Borstenmaterials liegen.

7. verfahren nach einem der Ansprüche 1 bis 6, **dadurch gekennzeichnet, daß** für die Borstenschnüre (2) Kunststoffe mit der höheren Fließtemperatur bzw. Kristallit-Schmelztemperatur (zutreffend für kristalline- oder teilkristalline Polymere) eingesetzt werden gegenüber der FT bzw. KT der Spritzmasse für den Bürstenkörper (14).

8. Verfahren nach einem der Ansprüche 1 bis 5, **dadurch gekennzeichnet, daß** als Borstenmaterial Metalldrähte eingesetzt werden.

9. Verfahren nach Anspruch 1, **dadurch gekennzeichnet, daß** die Deckplatte (12) des Spritzgießwerkzeuges beim Öffnungsvorgang über die Zwischenplatte (11) hinaus soweit aufgefahren wird, daß nach dem Trennvorgang das fertige Bürstenerzeugnis durch den Ausstoßer problemlos und ohne Kerbungen zu hinterlassen in Richtung Deckplatte (12) aus der Zwischenplatte (11) ausgestoßen wird.

10. Verfahren nach Anspruch 1, **dadurch gekennzeichnet, daß** die Trennung der Borstenschnüre (2) durch das Trennmesser (10) in einem Abstand der Schnittebene (7) von der Bodenplatte (9) erfolgt, der sich aus der Materialqualität der Borstenschnüre, der Stärke und der Anzahl der Filamente, sowie aus der Länge und der Paßgenauigkeit der Führung in den Bohrungen der Bodenplatte (8; 9) des Spritzgießwerkzeuges definiert und etwa das Dreifache des Durchmessers der Borstenschnüre (2) beträgt.

11. Verfahren nach Anspruch 1 und 10, **dadurch gekennzeichnet, daß** die Richtung des hin- und herschwingenden Flachmessers (10) der Trennvorrichtung (4) mit der Bewegungsrichtung der Bodenplatten (8) und (9) der Grundplatte (5) beim Verklemmen der Borstenschnüre übereinstimmt.

12. Vorrichtung zur Durchführung des Verfahrens nach Anspruch 1, **dadurch gekennzeichnet, daß** das Durchtrennen der Borstenschnüre (2) mit einem quer zur Schneidrichtung hin- und herschwingenden flachen Trennmesser (10) im Spritzwerkzeug nach der Öffnung des Werkzeuges ohne Abkantwirkung zwischen Messer (10) und unterstützender Schneidunterlage, also im freien Raum, unter wesentlicher Nutzung der straffen Spannung der Borstenschnüre (2) im Raum zwischen den die Borstenschnüre (2) verklemmenden Bodenplatten (8; 9) und dem von der Zwischenplatte (11) gehaltenen Bürstenkörper (14) sowie der inneren Steifheit der Kunststoff borsten erfolgt.

## Claims

1. Process for the production of bristle products such as brushes, brooms, paintbrushes and the like, whereby the bristle bundle is molded as the tip of continuous bristle strands led through holes in the floor-plate in the interior of the mold , **characterized by** the sealing of the holes of the floor-plate (8; 9) of the injection molding tool, including the tips of the bristle strands (2) poking out of the interior of the mold (1) with the injection molding of the brush body (14) with plastic material being made in a first injection, before, in several additional injections, differing in pressure, speed and volume, of the interior of the mold (1) fill the space and after ending the injection molding process and reaching the opening position of the tool, the bristle strands (2) of the bristle field are immediately stuck through the floor-plates (8;9) of the base plate (5) and themiddle plate (11) after reaching the opening position of the tool holds the brush body (14) stably against the pulling direction of the bristle strands (2) and thereby crates a zone of tensile bristle strands between the body of the brush (14) and the floor-plate (9) in which the cutting stage occurs only with the tension of the bristle strands (2) and the internal stiffness of the bristle filaments, whereby the cutting blade (10) is shown as a pendulum flat blade without a cross cut.

2. Process in accordance with claim 1, **characterized by**, the sealing plastic (13) to be completed in the first step of the multi-phased injection process is injected into the interior of the mold (1) with a speed of more than 100 mm/s and a pressure of more than 1.5 x 100⁸ Pa.

3. Process in accordance with claims 1 and 2, **characterized by**, the plastic substance (13) injected in the first step is injected in a volume that the floor-plate (9) including the entire bristle field is covered without the interior of the mold (1) being completely covered.

4. Process in accordance with claims 1 to 3, **characterized by** the injection pressure never exceeding 4 x 100⁷ Pa until the complete filling of the interior of the mold and the completion of the injection process.

5. Process in accordance with claims 1 to 4, **characterized by** a period of at least 2.5 s being between the first injection step and the conclusion of the injection process.

6. Process in accordance with claims 1 to 5, **characterized by** the range of the temperature of the injection mass for the body of the brush (14) can be selected from ca. 10°C above the flow temperature FT or the crystallite-melting temperature CT (for crystalline or partial-crystalline polymers) of the bristle material.

7. Process in accordance with claims 1 to 6, **characterized by** the plastic substance used for the bristle strands (2) will have a higher low temperature or crystallite-melting temperature (for crystalline or partial-crystalline polymers) than the FT or CT of the injection mass for the body of the brush (14)

8. Process in accordance with claims 1 to 5, **characterized by** metal wires being used for the bristle material.

9. Process in accordance with claim 1, **characterized by** the cover plate (12) of the injection mold tool being extended so far above the middle plate (11) in the opening process that after the separation process the finished brush is ejected from the middle plate by an ejector without difficulty or leaving grooves in the direction of the cover-plate (12).

10. Process in accordance with claim 1, **characterized by** the separation of the bristle strands (2) by the cutting blade (10) in a distance of the cutting plane (7) from the floor-plate (9) which is determined by the quality of the material of the bristle strands, the strength and number of the filaments and the length and precision of the guidance in the holds of the floor-plates (8,9) of the injection mold tool and about three times the diameter of the bristle strands (2).

11. Process in accordance with claims 1 and 10, **characterized by** the direction of the swing flat blade (10) of the cutting device (4) conforming to the direction of the movement of the floor-plates (8) and (9) of the base plate (5) with the compression of the bristle strands.

12. Device for performing the process in accordance with claim 1, **characterized by** the cutting of the bristle strands (2) with a swinging flat blade (10) is performed in the injection tool after opening the tool without an edging effect between the blade (10) and a supportive cutting base, i.e. in the open, at a right angle to the cutting direction, basically taking advantage of the tension of the bristle strands (2) in the space between the floor-plates (8,9) holding the bristle strands (2) and the middle plate (11) holding the body of the brush (14) and the internal stiffness of the plastic bristles.

## Revendications

1. Procédé de fabrication de produits à poils, tels que brosses, balais, pinceaux et produits semblables, dont les supports de brossage en matière synthétique sont fabriqués par injection, les faisceaux de poils faisant également partie du moulage par injection en tant que pointes des fibres de garnissage sans fin introduites dans l'espace intérieur de moulage à travers des alésages situés dans la plaque de fond, **caractérisé par le fait que**, au cours d'une première étape d'injection du moulage par injection des supports de brossage (14), les alésages de la plaque de fond (8;9) de l'outil de moulage par injection, y compris les pointes des fibres de garnissage (2) émergeant à l'intérieur de l'espace intérieur de moulage (1), sont scellés à l'aide de la masse de matière synthétique avant le remplissage de l'espace intérieur de moulage (1) au cours de plusieurs autres étapes d'injection se différenciant les unes des autres de par la pression, la vitesse et le volume et, au terme du processus de moulage par injection et après l'ouverture de l'outil, les fibres (2) du garnissage sont de nouveau immédiatement bloquées par les plaques de fond (8;9) de la plaque de base (5) et la plaque intercalaire (11) maintient de façon stable le support de brossage (14) contre le sens de traction des fibres de garnissage (2) après l'ouverture de l'outil et, ainsi, une zone de fibres de garnissage (2) extrêmement tendues se forme entre le support de brossage (14) et la plaque de fond (9), zone dans laquelle l'opération de sectionnement s'effectue seulement grâce à l'utilisation de la tension des fibres de garnissage (2) et de la raideur interne des filaments, la lame à trancher (10) étant développée en lame plate à mouvement alternatif sans contre-lame.

2. Procédé selon la revendication 1, **caractérisé par le fait que**, au cours de la première étape du procédé d'injection en plusieurs étapes qui est l'étape de scellement, la masse de matière synthétique (13) est injectée à l'intérieur de l'espace intérieur de moulage (1) à une vitesse supérieure à 100 mm/s et une pression supérieure à 1,5 x 10⁸ Pa.

3. Procédé selon la revendication 1 ou 2, **caractérisé par le fait que**, au cours de la première étape, la masse de matière synthétique (13) est injectée dans une proportion telle qu'elle recouvre la plaque de fond (9), y compris l'ensemble du garnissage, sans remplir complètement l'espace intérieur de moulage (1).

4. Procédé selon l'une des revendications 1 à 3, **caractérisé par le fait que,** au cours des autres étapes d'injection, la pression d'injection ne dépasse pas 4 x 10⁷ Pa jusqu'à ce que l'espace intérieur de moulage (1) soit complètement rempli et que le processus d'injection soit terminé.

5. Procédé selon l'une des revendications 1 à 4, **caractérisé par le fait qu'**entre la première étape d'injection et la fin du processus d'injection il y a un intervalle de temps d'au moins 2,5 s.

6. Procédé selon l'une des revendications 1 à 5, **caractérisé par le fait que** la température de la matière injectée pour le support de brossage (14) doit être sélectionnée parmi des plages situées env. 10°C au-dessus de la température de fluidification et de la température de fusion de la cristallite respectivement (pour ce qui est des polymères cristallins ou partiellement cristallins) du matériau constituant les poils.

7. Procédé selon l'une des revendications 1 à 6, **caractérisée par le fait que** pour les fibres de brossage (2) on emploie des matières synthétiques présentant des températures de fluidification et de fusion de la cristallite respectivement (pour ce qui est des polymères cristallins ou partiellement cristallins) plus élevées que celles de la matière injectée pour le support de brossage (14).

8. Procédé selon l'une des revendications 1 à 5, **caractérisé par le fait que** des fils métalliques sont utilisés comme matériau constituant les poils.

9. Procédé selon la revendication 1, **caractérisé par le fait que** l'ouverture de la plaque de recouvrement (12) de l'outil de moulage par injection est manoeuvrée de façon à ce qu'elle dépasse la plaque intercalaire et qu'au terme de l'opération de séparation, le produit de brosserie achevé est éjecté de la plaque intercalaire (11) dans le sens de la plaque de recouvrement (12) par l'éjecteur sans problème et sans laisser d'entailles.

10. Procédé selon la revendication 1, **caractérisé par le fait que** la séparation des fibres de garnissage (2) s'effectue grâce à la lame à trancher (10) à un écart du plan de sectionnement (7) par rapport à la plaque de fond (9) qui se définit à partir de la qualité du matériau constituant les fibres de garnissage, l'épaisseur et le nombre de filaments, ainsi que la longueur et l'exactitude du guidage dans les alésages de la plaque du fond (8;9) de l'outil de moulage par injection et correspond environ au triple du diamètre des fibres de garnissage (2).

11. Procédé selon les revendications 1 et 10, **caractérisé par le fait que** le sens de la lame plate (10) à mouvement alternatif du dispositif de séparation (4) coïncide avec le sens de déplacement des plaques de fond (8) et (9) de la plaque de base (5) lorsque les fibres de garnissage sont bloquées.

12. Dispositif de réalisation du procédé selon la revendication 1, **caractérisé par le fait que** le sectionnement des fibres de garnissage (2) avec une lame à trancher (10) plate à mouvement alternatif diagonal par rapport au sens de sectionnement et située dans l'outil d'injection a lieu après l'ouverture de l'outil sans effet de pliage entre la lame (10) et un support de sectionnement, donc librement, en utilisant essentiellement la tension due à la raideur des fibres de garnissage (2) dans l'espace entre les plaques de fond (8;9) bloquant les fibres de garnissage (2) et le support de brossage (14) maintenu par la plaque intercalaire (11) ainsi qu'en utilisant la raideur interne des poils en matière synthétique.
